# EUROPEAN PATENT APPLICATION

(11) **EP 1 638 306 A1**
(43) Date of publication of application: **22.03.2006**
(21) Application number: 04762034.9
(22) Date of filing: 04.08.2004
(51) Int. Cl.: H04M 11/06, H04M 1/26

(54) **THE SYSTEM AND METHOD IMPLEMENTING NETWORK TELEPHON COMMUNICATION BY APPLYING THE INSTANT MESSENGER**

(30) Priority: 07.08.2003 CN 03140102
(71) Applicant: Tencent Technology (Shenzhen) Company Limited, Shenzhen, Guangdon 518044 (CN)
(72) Inventor: WU, Haijun, Shenzhen Guangdong 518044 (CN); JIANG, Tao, Shenzhen Guangdong 518044 (CN); CHEN, Yan, Shenzhen Guangdong 518044 (CN); WU, Bo, Shenzhen Guangdong 518044 (CN)
(74) Representative: Manitz, Finsterwald & Partner GbR
(86) International application number: PCT/CN2004/000897
(87) International publication number: WO 2005/015891

(57) **Abstract**

The present invention provides a system and method for Voice over Internet Protocol (VoIP) by using an instant messenger (IM). The key to the system in accordance with this invention is to set a phone terminal connected with the IM and set a phone control module inside the IM. The method in accordance with this invention is mainly to carry out the sending and receiving of instructions as well as carry out voice processing through said phone terminal so as to accomplish the voice-information communications between the calling and called terminals. As it is via a commonly-used USB port or IEEE 1394 port that the set phone terminal connects with the IM, this invention is more practical. With this invention, the drawback that the current method of phone communications using IM is not in keeping with the common habit of making calls is overcome while the operation remains simple.

## Description

### Field of the Technology

The present invention relates to communications technology, and particularly to a system and method for Voice over Internet Protocol (VoIP) by using instant messenger.

### Background of the Invention

Network Instant Messaging is a communications service based on the Internet and is provided primarily for instant communications on the network. Instant messaging has been widely applied and recognized on the Internet and is implemented by means of instant messenger (IM), which is popular to numerous network users for its fast speed, various functions, stable application, compactness and high capability. Internet IM is extending to the combined application with virtual community of network, which represents the trend of network IM. With IM, users are able to perform various operations, such as sending and receiving information, transmitting files, making voice/video phone calls, and sending short information to mobile phones.

There are two methods for implementing communications with IM, one is that the IM in clients' terminals implements communications via an IM server; the other is that the IM in a client's terminal implements communications with the IM in the opposite client on the network without the involvement of an IM server when the client has a fixed IP address or the current IP address or port number of the client to be communicated has been obtained through other communication means. Specific description by taking the former method of the above as an example is hereinafter given.

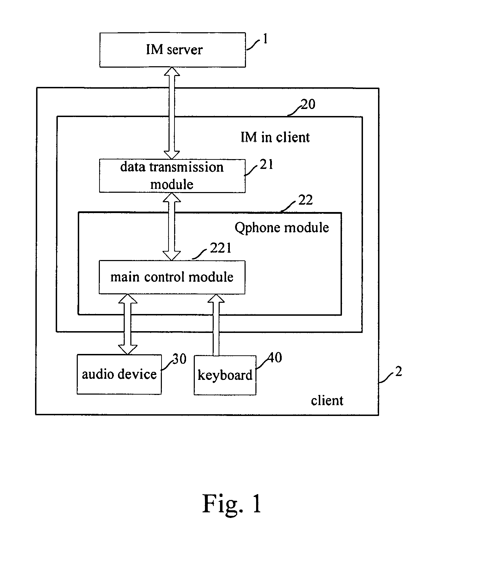

Figure 1 is a schematic diagram illustrating a system architecture for VoIP by means of IM in the prior art. This system includes IM server 1 and the client 2 comprising IM 20, audio device 30, and keyboard 40. IM 20 in the client 2 comprises the data transmission module 21 and Qphone (phone information processing) module 22, and Qphone module 22 comprises the main control module 221. Qphone module 22 in the IM 20, after receiving the input information from the keyboard 40, controls the audio device 30 to make the processing of digitalized compression for the signals from the microphone, and transmit the processed signal to IM server 1 via the data transmission module 21. IM server 1 then transmits this signal to the network side, i.e. to the telephone gateway closest to the destination, which will convert the digital signal into the analog signal that can be transmitted on the public telephone network for transmission; or the data transmission module 21 receives the signal from IM server 1 and transmits the signal to Qphone module 22 in the IM 20. Qphone module 22 controls the audio device 30 to convert the digital signal to analog signal which is used as the voice information received by the called.

As for the method by which the IM in the client contacts with the network side to implement communications, the working principle is the same as the foregoing example except that no IM server is needed to be involved. Thus no further description is given here.

It is obvious from the foregoing process of communication implementation that, when implementing voice phone communications through the Internet by means of IM, the user usually uses the earphone as a speaker, the microphone as a recorder, and the keyboard to input the phone number. Such a way of communications is not in line with the daily habit of communications and the operation is rather complicated, therefore, it is quite inconvenient for people who are used to making phone calls with traditional phone sets or mobile phones.

### Summary of the Invention

In view of the above, the objective of this invention is to provide a system and method for VoIP by using instant messenger such that the shortcoming of not conforming with the usual communication habit and rather complicated operation of the prior art can be overcome.

To achieve the above objective, this invention presents the solution as follows:

A system for VoIP by using instant messenger, including a client 2 which contains the instant messenger (IM) 20, wherein IM 20 comprises the data transmission module 21 and the Qphone module 22 comprising the main control module 221, the data transmission module in IM 20 transmits the information received from the main control module 221 in Qphone module 22 to the network side, or transmits the information received from the network side to the main control module 221 in Qphone module 22, the system further comprising phone control module 222 and phone terminal 3, wherein
said phone control module 222 connects with the main control module 221 and phone terminal 3, converting instructions transmitted between the main control module 221 and phone terminal 3 to make the instructions mutually identifiable; and said phone terminal 3 connects with the main control module 221, receiving and sending voice information.

Preferably, said phone control module 222 is located inside Qphone module 22, or is an independent module.

Preferably, said phone terminal 3 comprises the phone device control interface 31, the audio device 32, pad device 33 and indicator 34, wherein
Said phone device control interface 31 connects with the phone control module 222, audio device 32, pad device 33 and indicator 34, respectively, receiving the executable control instruction from the phone control module 222, driving the audio device 32 to start or stop ringing, and driving the indicator 34 to light on or light off; or receiving the instructions from the pad device 33, and transmitting the instructions to the phone control module 222; and
Said audio device 32 connects with the main control module 221, receiving the digital information from the main control module 221, and converting it into the voice information, or converting the received voice information into digital information and sending it to the main control module 221.

Preferably, Qphone module 22 further comprises audio input/output control module 223, which connects with the main control module 221, the audio device 30 contained in the client 2 and the audio device 32 inside phone terminal 3, respectively, and controls, according to the instructions of the main control module 221, the audio device 30 contained in the client 2 or the audio device 32 inside phone terminal 3 to send or receive voice information.

Preferably, said client further comprises the video device 50, which connects with the main control module 221, receives and displays the video information from the main control module 221, or transfers to the main control module 221 the video information to be sent.

Preferably, said phone terminal 3 connects with the phone control module 222 and main control module 221 via a USB port or IEEE 1394 port.

Preferably, the system further comprises an IM server 1, which receives the information from the data transmission module 21, and sends the information to the network side, or transmits the received information from the network side to the data transmission module 21.

A method for VoIP by using instant messenger (IM), comprising the steps of:
connecting the IM in the client with phone terminal;
said phone terminal initiating a call instruction converted into information identifiable to said IM, sending the call instruction to the IM connected with the phone terminal ;
the IM initiating a call request to the network side according to received information, and setting up a call connection with the called terminal;
said phone terminal communicating with the called terminal via said set-up call connection.

Preferably, the call instruction originated by the phone terminal contains the unique identifier of the called terminal.

Preferably, said unique identifier is acquired from the information inputted by the calling user, or acquired from the configured address book in the IM according to the instruction of the calling user.

Preferably, said called terminal is a common phone terminal or a phone terminal connected with the IM in another client.

Preferably, said method for the IM initiating a call request to the network side according to the received information and setting up a call connection with the called terminal comprises: the IM initiating a call request directly to the network side according to the received information and setting up a call connection with the called terminal, or the IM initiating a call request via an IM server to the network side and setting up a call connection with the called terminal.

Preferably, said phone terminal connects with the IM via a USB port or 1394 port.

A method for VoIP by using instant messenger, comprising the steps of:
connecting the IM in the client with phone terminal;
said IM, after receiving the call connection request from the calling terminal, converting the information of call connection request into the information identifiable to said phone terminal before transmitting the information to the phone terminal, said phone terminal setting up a call connection with the calling terminal according to the information of connection request;
said phone terminal communicating with the calling terminal via the set-up call connection.

Preferably, said calling terminal is a common phone terminal or a phone terminal connected with the IM in another client.

Preferably, the method for said phone terminal setting up a call connection with the calling terminal according to the information of connection request comprises: said phone terminal setting up a call connection with the calling terminal via the IM in the client connected with the phone terminal, or said phone terminal setting up a call connection via an IM server with the calling terminal through the IM in the client connected with the phone terminal.

Preferably, said phone terminal connects with the IM via a USB port or 1394 port.

The key of the system in accordance with this invention lies in setting a phone terminal connected with the IM in the client and setting in the IM a phone control module. The essence of the method in accordance with this invention is to implement the exchange of voice information between the calling and called terminals by sending and receiving instructions and carrying out voice processing through said phone terminal. As it is via a universal USB or 1394 port that the set phone terminal connects with the IM, this invention is more practical. With this invention, the drawback that the method in the prior art is not in keeping with the daily habit of making phone calls is overcome and the operation in accordance with this invention is simple.

### Brief Description of the Drawings

Figure 1 is a schematic diagram illustrating a system architecture in the prior art for VoIP by using instant messenger;
Figure 2 is a schematic diagram illustrating the network architecture in accordance with this invention for VoIP by using instant messenger;
Figure 3 is a schematic diagram illustrating the network architecture of the first embodiment of this invention for VoIP by using instant messenger;
Figure 4 is a schematic diagram illustrating the network architecture of the second embodiment of this invention for VoIP by using instant messenger;
Figure 5 is the flowchart in accordance with this invention for VoIP by using instant messenger;
Figure 6 is the flowchart for the phone control module to perform the instructions from the phone terminal;
Figure 7 is the flowchart for the phone control module to send instructions to control the phone terminal to carry out operation.
Figure 8 is the flowchart for the phone terminal to receive instructions;
Figure 9 is the flowchart for the phone terminal to send instructions.

### Embodiments of the Invention

This invention is hereinafter described in detail with reference to the accompanying drawings.

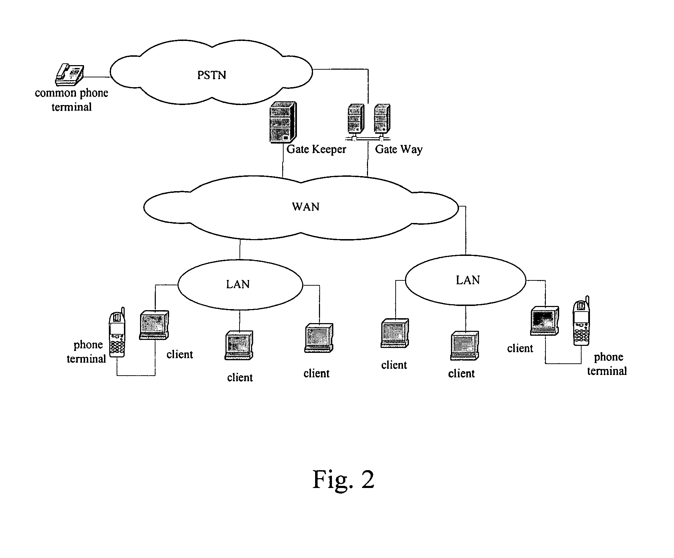

Figure 2 is a schematic diagram illustrating the network architecture in accordance with this invention for VoIP by using instant messenger. The phone terminal is connected with the IM inside the client while the client accesses the wide area network (WAN) via the local area network (LAN) and is further connected with a Public Switched Telephone Network (PSTN) via the gateway. When a user desires to implement phone communications via the Internet by using an IM, it is possible to do so by just using the above phone terminal and the IM without the need of such devices as earphone and microphone. Moreover, this phone terminal which is connected with the IM inside the client can not only implement communications with another phone terminal which is also connected with the IM inside the client, but implement communications with ordinary phone terminals. Therefore, with this invention, phone communications via the Internet by using an IM become in keeping with the common habit of making phone calls and the operation is easy.

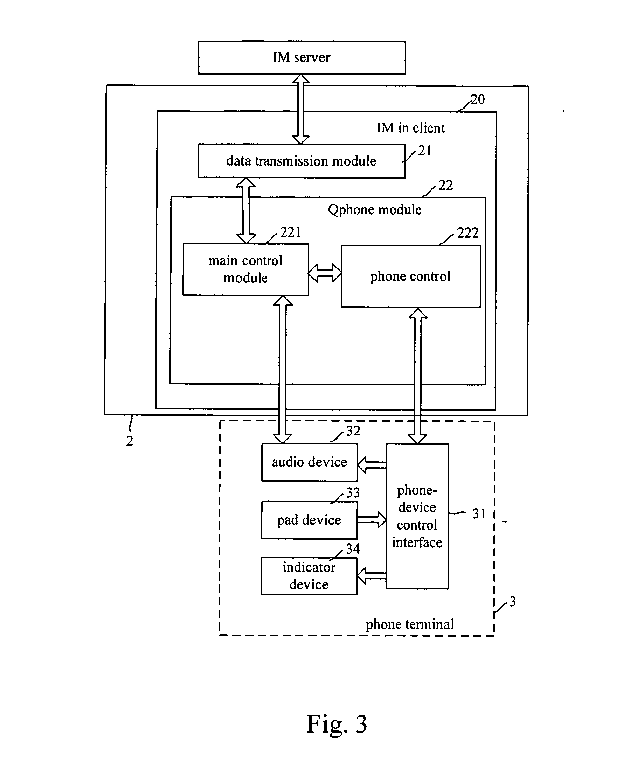

Figure 3 is a schematic diagram illustrating the network architecture of the first embodiment of this invention for VoIP by using instant messenger. The system in this embodiment comprises IM server 1 and the client 2 comprising IM 20, where IM 20 comprises the data transmission module 21 and Qphone module 22. The data transmission module 21 in IM 20 sends the received information from Qphone module 22 to IM server 1, which will send this information to the network side, or IM server 1 sends the received information from the network side to the data transmission module 21, which will send this information to Qphone module 22. Qphone module 22 contains the main control module 221. The above system also comprises the phone control module 222 and the phone terminal 3.

Said phone terminal 3 connects with the main control module 221 and the phone control module 222, converting the received voice information into digital signals before transmitting the signal to the main control module 221, and transmitting instructions to the phone control module 222; or, receiving the digital information from the main control module 221 and converting it into voice information, and receiving the control instruction from the phone control module 222 and driving itself to execute the instruction.

The above-said phone control module 222 may be located in Qphone module 22, or not in Qphone module 22 to be an independent module as long as it is connected with the main control module 221 and is able to perform the following operations: receiving instructions from the phone terminal 3, converting the received information into the instruction that is executable by the main control module 221, and then sending the instruction to the main control module 221, or receiving the control instruction from the main control module 221, converting it into the control instruction that is executable by the phone terminal 3, and then sending it to the phone terminal 3.

Said main control module 221 connects with the data transmission module 21 in IM 20 in the client 2, receiving from the phone control module 222 the control information to be sent and from the phone terminal 3 the voice information to be sent, and sending the information to be sent to the data transmission module 21, or receiving from the data transmission module 21 the voice and control information, and sending the voice information directly to the phone terminal 3 and the control information to the phone control module 222.

In another word, the phone terminal 3 is typically a digital phone set, mainly for use in dialing, as well as receiving and transmitting voice information while the phone control module 222 is mainly for use in converting instructions transferred between the main control module 221 and the phone terminal 3 so as to make the instructions identifiable to each other.

Said phone terminal 3 comprises phone-device control interface 31, audio device 32, pad (the simplified form for dial pad) device 33, and indicator device 34, where phone-device control interface 31 connects with phone control module 222, audio device 32, pad device 33, and indicator device 34, respectively, receiving the executable control instructions from phone control module 222, driving audio device 32 to start or stop ringing, and driving indicator device 34 to light on or off; or, receiving the instructions from pad device 33 and transmitting the information to phone control module 222. The audio device 32 also connects with the main control module 221, receiving the digital information from the main control module 221 and converting the information into voice information to broadcast, or converting the received voice information into digital information and sending the information to the main control module 221. The phone terminal 3 connects with the phone control module 222 and the main control module 221 via a USB or 1394 port.

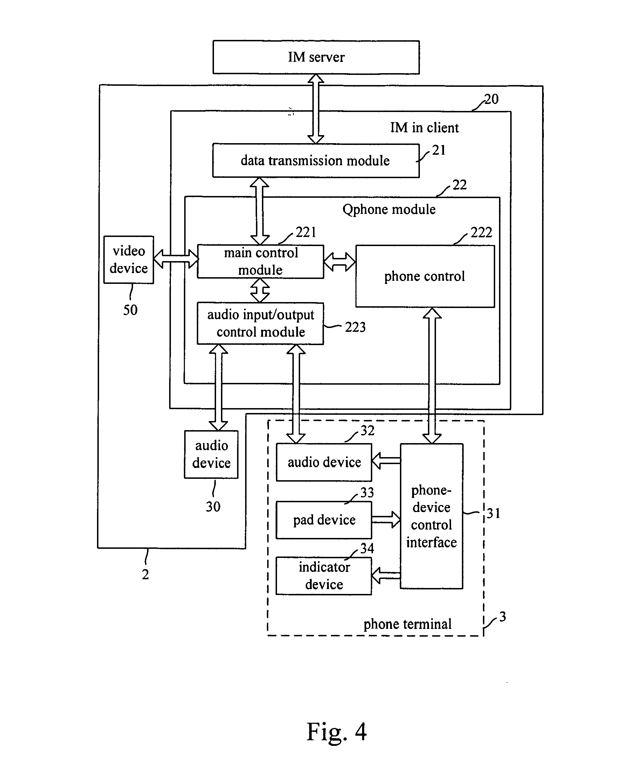

Figure 4 is a schematic diagram illustrating the network architecture of the second embodiment of this invention for VoIP by using instant messenger. In this embodiment, an audio input/output control module 223 is added in Qphone module 22 on the basis of the embodiment as shown in Figure 3. This audio input/output control module 223 connects with the main control module 221, the audio device 30 contained in the client 2, and the audio device 32 inside the phone terminal 3, respectively, and controls the audio device 30 contained in the client 2 or the audio device 32 inside the phone terminal 3 to send or receive voice information. Here, according to the selection of the user, the main control module 221 can make the audio device 30 contained in the client 2 or the audio device 32 inside the phone terminal 3 enabled, i.e. the user can either use the audio device 30 contained in the client 2 or use the audio device 32 inside the phone terminal 3 to send or receive voice information.

In addition, in this embodiment, video device 50 is added in the client. This video device 50 connects with the main control module 221, receives and displays the video information from the main control module 221, or sends to the main control module 221 the video information to be sent. Then, the user will achieve the implementation of video-phone communications.

Obviously, if the client has a fixed IP address or the current IP address of the opposite party has been acquired through other communication means, said system in all the above-said embodiments may not include IM server 1, i.e. IM 20 in the client 2 can implement communications with the IM in the client of the opposite party through the network and IM server 1 is no longer needed.

Specific description is hereinafter given to the method for implementing communications with the system in accordance with this invention.

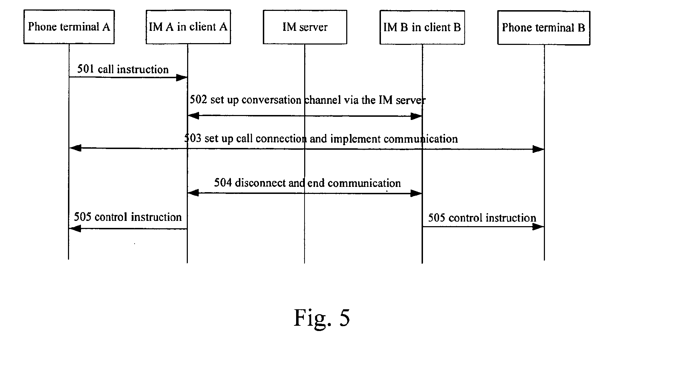

Figure 5 is the flowchart of an embodiment of this invention for VoIP by using instant messenger. In this embodiment, phone terminal A connects with IM A inside client A while phone terminal B connects with IM B inside client B, and IM A and IM B are connected by an IM server. Phone terminal A is the calling terminal while phone terminal B is the called terminal.

Step 501: Phone terminal A sends a call instruction to the phone control in IM A inside client A. This call instruction contains the unique identifier of client B.

Said unique identifier may be directly inputted by the calling user using phone terminal A, for instance, the calling user may input through phone terminal A the unique identifier "the characteristic symbol + the phone number of phone terminal B".

Said unique identifier may also be acquired from the address book configured in IM A according to the instruction inputted to phone terminal A by the calling user. The implementation specifically comprises: IM A, after receiving the instruction of calling the address book from phone terminal A and deciding that phone terminal A is a terminal legally logged-in, displaying the address book to the calling user and acquiring the unique identifier of client B according to the user's selection.

Step 502: After the phone control in IM A converts the received instruction into the calling information identifiable to IM A, IM A inside client A sends a call connection request to the IM server according to the converted information. This call connection request contains the unique identifiers of client A and client B. If IM A receives a response information of success from the IM server, then set up the conversation channel between IM A and IM B and continue with the subsequent steps; if IM A receives a response information of failure from the IM server, then end this process.

Step 503: IM A sends to phone terminal B via IM B a request for setting up a call connection according to the information of the conversation channel. If IM A receives a response information of success from phone terminal B, then set up the call connection between phone terminals A and B and the phone control inside IM B in client B, after converting the received information into the information identifiable to phone terminal B, sends to phone terminal B the control instruction, for example, switching on the audio device inside phone terminal B, controlling phone terminal B to ring or turn on the in-coming call indicator, so as to implement the communication and continue with the subsequent steps; if IM A receives a response information of failure from phone terminal B or has not received a response information from phone terminal B within the preset period of time, then IM A instructs the IM server to disconnect from the conversation channel already set up and end this process.

Step 504: After the conversation ends, IM A or IM B, after receiving the signal indicating the end of conversation, instructs the IM server to disconnect from the conversation channel between IM A and IM B.

Step 505: The phone control in IM A and the phone control in IM B send the control instruction to the phone terminals connected therewith, respectively, for example, the instruction of switching off the audio device in the phone terminal, controlling the phone terminal to turn off the conversation indicator or turn on the conversation-end indicator, and end the conversation.

In connection with the embodiment as shown in Figure 5, if the calling and called terminals have fixed IP addresses or the calling terminal has acquired the current IP address of the called terminal through other means of communications, then IM A and IM B may communicate directly, i.e. IM A and IM B implement direct communications between them through the network without the need of the involvement of the IM serer.

In addition, when the calling party is a phone terminal connected with an IM, the called party may be a phone terminal connected with an IM or an ordinary phone terminal. Then the client where the calling party is may set up a connection with the called party through an IM server, or connects with the called party after acquiring the IP address of the called through other means without the need of the IM server. Likewise, if the called party is a phone terminal connected with an IM, the calling party may be a phone terminal connected with an IM or an ordinary phone terminal. Then the calling party may set up a connection with the client where the called party is through an IM server, or connect with the called party after acquiring the IP address of the called through other means without the need of the IM server.

In all the above embodiments, the phone terminal is connected with the IM in the client through a USB or 1394 port.

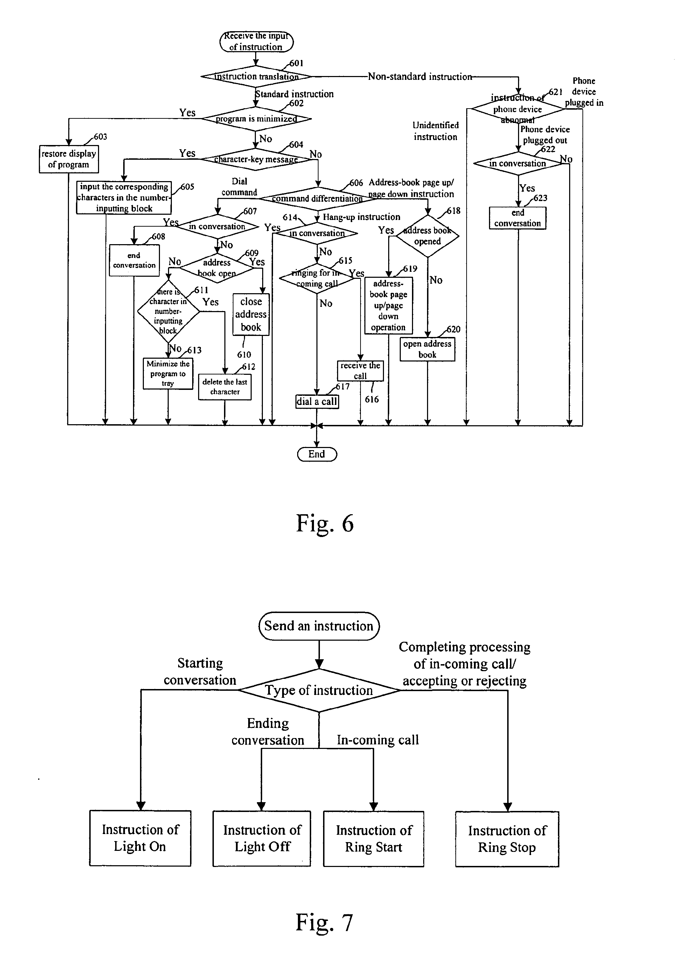

The instructions received by the phone control from the phone terminal include standard instructions and non-standard instructions. The non-standard instructions are such instructions as the instruction of phone device abnormal. The standard instructions include character-key information instructions and non-character-key information instructions. The non-character-key information instructions include hang-up instruction, dial instruction, address-book instruction, and etc.. Figure 6 is the flowchart for the phone control to perform the instructions from the phone terminal.

Step 601: After receiving an instruction from the phone terminal, the phone control will translate the instruction and decide whether this is a standard instruction, if yes, execute step 602, otherwise execute step 621.

Step 602: Decide whether the main program window that calls Qphone is currently in the minimized state, if yes, execute step 603, restore to the displaying state of the main program window, and end this procedure, otherwise execute step 604.

Step 604: Decide whether the current input is a character-key information, if yes, execute step 605, input directly in the input block the character information, and end this procedure; otherwise execute step 606, and differentiate the instruction, if it is a hang-up instruction, execute step 607, if it is a dial instruction, execute step 614, if it is an address-book page-up/page-down instruction, execute step 618.

Step 607: Decide whether the phone terminal is currently in conversation, if yes, execute step 608, send to the phone terminal the instruction of ending the conversation and end this procedure; otherwise execute step 609, decide whether the address-book has been opened, if yes, execute step 610, close the address-book and end this procedure; otherwise execute step 611, decide whether there is character in the number-input block, if yes, execute step 612, delete the last character, and end this procedure, otherwise execute step 613, minimize the current application window and end this procedure.

Step 614: Decide whether the phone terminal is currently in conversation, if yes, end this procedure; otherwise execute step 615, decide whether there is the signal for in-coming call and the ringing, if yes, execute step 616, receive the call, and end this procedure, otherwise execute step 617, dial a call and end this procedure.

Step 618: Decide whether the address book is currently open, if yes, execute step 619, carry out the operation of address-book page-up/page down and end this procedure; otherwise execute step 620, open the address book and end this procedure.

Step 621: Decide the abnormal type of the non-standard instruction, if it is an unidentifiable instruction of abnormality, just end this procedure, if it is an instruction of abnormality for plugging-in phone terminal, just end this procedure as well, if it is an instruction of abnormality for plugging-out phone terminal, execute step 622, decide whether this phone terminal is currently in conversation, if yes, execute step 623, end this procedure, otherwise just end this procedure.

The instructions sent by the phone control include starting conversation, ending conversation, there being an in-coming call, and completing processing of in-coming call, i.e. accepting or rejecting in-coming call. Refer to Figure 7, which is the flowchart for the phone control module to send instructions to control the phone terminal to perform operation.

The phone control module decides the type of the received instruction, if it is an instruction of starting conversation, send to the phone terminal the instruction of lighting up the phone terminal indicator, i.e. the instruction "Light On"; if it is an instruction of ending conversation, send to the phone terminal the instruction of putting off the indicator, i.e. the instruction "Light Off'; if it is an instruction of there being an in-coming call, send to the phone terminal the instruction of starting ringing, i.e. the instruction "Ring Start"; if it is an instruction of completing processing of in-coming call, i.e. accepting or rejecting an in-coming call, send to the phone terminal the instruction of stopping ringing, i.e. the instruction "Ring Stop".

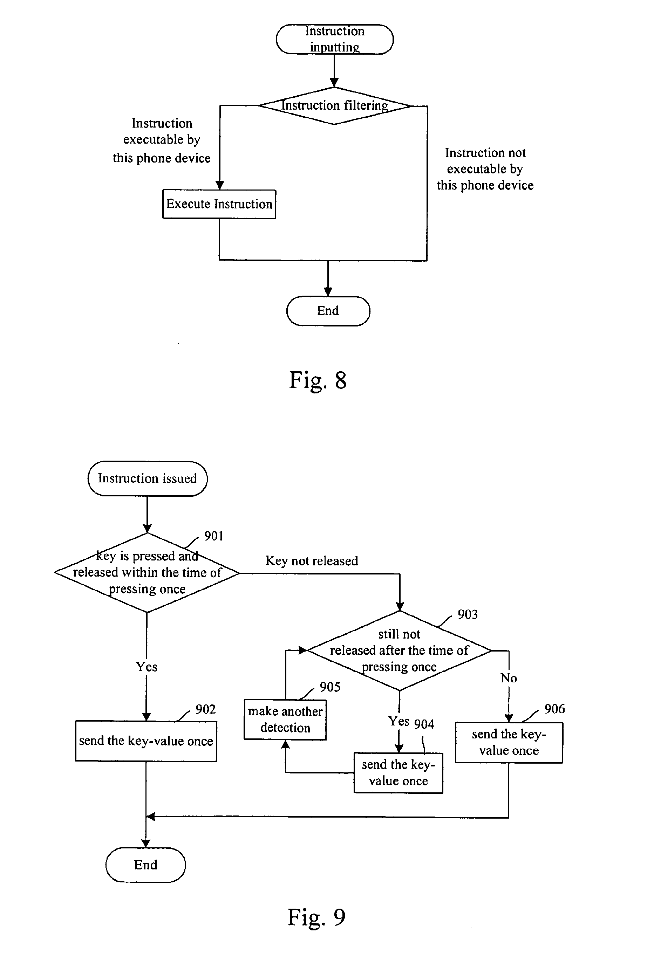

Figure 8 is the flowchart for the phone terminal to receive instructions. The phone terminal decides whether the received instruction is an instruction executable by this terminal, if yes, execute this instruction and end this procedure, otherwise end this procedure directly.

Figure 9 is the flowchart for the phone terminal to send instructions.

Step 901: The phone terminal decides whether there is a key pressed and released within the time of pressing a key once, if yes, execute step 902, send the key-value once, and end this procedure; otherwise, execute step 903, decide whether the key has not been released yet within the time interval for pressing a key once, if yes, execute steps 904 ― 905, send the key-value once, wait for the next detection of key-pressing, and repeat step 903; otherwise, execute step 906, send the key-value once, and end this procedure.

The above description is only preferred embodiments of this invention and should not be construed as limiting the invention. Any modification, equivalent substitution, and improvement without departing from the spirit and principle of this invention should be included in the protection scope thereof.

## Claims

1. A system for Voice over Internet Protocol (VoIP) by using an instant messenger (IM), comprising a client (2)which contains an IM (20), wherein the IM (20) comprises a data transmission module (21) and a phone information processing (Qphone) module (22) comprising a main control module (221), the data transmission module (21) in IM (20) transmits the information received from the main control module (221) in Qphone module (22) to the network side, or transmits the information received from the network side to the main control module (221) in Qphone module (22), said system further comprising a phone control module (222) and a phone terminal (3), wherein
said phone control module (222) connects with the main control module (221) and phone terminal (3), converting instructions transferred between the main control module (221) and phone terminal (3) to make the instructions identifiable to each other; and said phone terminal (3) connects with the main control module (221), receiving and sending voice information.

2. A system according to Claim 1, wherein said phone control module (222) is located inside Qphone module (22), or is an independent module.

3. A system according to Claim 1, wherein said phone terminal (3) comprises a phone-device control interface (31), an audio device (32), a dial-pad device (33) and an indicator device (34), wherein
said phone-device control interface (31) connects directly with the phone control module (222), audio device (32), dial-pad device (33) and indicator device (34), respectively, receiving the executable control instruction from the phone control module (222), driving the audio device (32) to start or stop ringing, and driving the indicator (34) to light on or light off; or receiving the instructions from the pad device (33), and transferring the instructions to the phone control module (222); and
said audio device (32) connects with the main control module (221), receiving the digital information from the main control module (221), and converting this information into voice information, or converting the received voice information into digital information and sending this digital information to the main control module (221).

4. A system according to Claim 3, wherein the Qphone module (22) further comprises an audio input/output control module (223), which connects with the main control module (221), the audio device (30) contained in the client (2) and the audio device (32) inside the phone terminal (3), respectively, and controls, according to the instructions of the main control module (221), the audio device (30)contained in the client (2) or the audio device (32) inside the phone terminal (3) to send or receive voice information.

5. A system according to Claim 1 or Claim 4, wherein the client (2) further comprises the video device (50), which connects with the main control module (221), receiving and displaying the video information from the main control module (221), or transferring to the main control module (221) the video information to be sent.

6. A system according to Claim 1, wherein said phone terminal (3) connects with the phone control module (222) and the main control (221) via a USB or IEEE 1394 port.

7. A system according to Claim 1, further comprising an IM server (1), which receives the information from the data transmission module (21) and sends the information to the network side, or transmits the received information from the network side to the data transmission module (21).

8. A method for Voice over Internet Protocol (VoIP) by using an instant messenger (IM), comprising the steps of:
connecting the IM in the client with phone terminal;
said phone terminal initiating a call instruction converted into information identifiable to said IM, sending the call instruction to the IM connected with the phone terminal ;
the IM initiating a call request to the network side according to received information, and setting up a call connection with the called terminal;
said phone terminal communicating with the called terminal via said set-up call connection.

9. A method according to Claim 8, wherein said call instruction originated by the phone terminal contains the unique identifier of the called terminal.

10. A method according to Claim 9, wherein said unique identifier is acquired from the input information of the calling user or from the address-book configured in the IM according to the instruction from the calling user.

11. A method according to Claim 8, wherein said called terminal is a common phone terminal or a phone terminal connected with the IM in another client.

12. A method according to Claim 8, wherein said method for the IM initiating a call request to the network side according to the received information and setting up a call connection with the called terminal comprises: the IM initiating a call request directly to the network side according to the received information and setting up a call connection with the called terminal, or the IM initiating a call request via an IM server to the network side and setting up a call connection with the called terminal.

13. A method according to Claim 8, wherein said phone terminal connects with the IM via a USB port or 1394 port.

14. A method for Voice over Internet Protocol (VoIP) by using an instant messenger (IM), comprising the steps of:
connecting the IM in the client with phone terminal;
said IM, after receiving the call connection request from the calling terminal, converting the information of call connection request into the information identifiable to said phone terminal before transmitting the information to the phone terminal, said phone terminal setting up a call connection with the calling terminal according to the information of connection request;
said phone terminal communicating with the calling terminal via the set-up call connection.

15. A method according to Claim 14, wherein said calling terminal is a common phone terminal or a phone terminal connected with the IM in another client.

16. A method according to Claim 14, wherein the method for said phone terminal setting up a call connection with the calling terminal according to the information of connection request comprises: said phone terminal setting up a call connection with the calling terminal via the IM in the client connected with the phone terminal itself, or said phone terminal setting up a call connection via an IM server with the calling terminal through the IM in the client connected with the phone terminal itself.

17. A method according to Claim 14, wherein said phone terminal connects with the IM via a USB port or 1394 port.
